(19) Europäisches Patentamt
European Patent Office
Office européen des brevets

(11) **EP 4 024 145 A1**

(12) **EUROPEAN PATENT APPLICATION**
published in accordance with Art. 153(4) EPC

(43) Date of publication:
**06.07.2022 Bulletin 2022/27**

(21) Application number: **19947874.4**

(22) Date of filing: **30.09.2019**

(51) International Patent Classification (IPC):
**G05B 17/02** *(2006.01)*

(52) Cooperative Patent Classification (CPC):
**G05B 17/02**

(86) International application number:
**PCT/CN2019/109674**

(87) International publication number:
**WO 2021/062754 (08.04.2021 Gazette 2021/14)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Siemens Aktiengesellschaft**
**80333 München (DE)**

(72) Inventors:
• **WANG, Dehui**
**Beijing 100102 (CN)**

• **JIANG, Ning**
**Beijing 100102 (CN)**
• **ZHANG, Tuo**
**Beijing 201100 (CN)**
• **TIAN, Zhong Wei**
**Beijing 100102 (CN)**

(74) Representative: **Isarpatent**
**Patent- und Rechtsanwälte Barth**
**Charles Hassa Peckmann & Partner mbB**
**Friedrichstrasse 31**
**80801 München (DE)**

(54) **NONLINEAR MODEL MODELING METHOD, DEVICE AND STORAGE MEDIUM**

(57) Provided are a nonlinear model modeling method, device and a storage medium. Wherein, the method includes: determining the complete design point data for each target nonlinear basis process of each apparatus; establishing the description formula of the nonlinear basis process using the ratio of the similarity number supported by the similarity criterion to the similarity number based on the design point data, to obtain the general model of the nonlinear basis process; the general model includes variable parameters that change nonlinearly with changes in actual operating condition parameters; constructing the machine learning algorithm between the actual working condition parameters and the variable parameters, and establishing the association relationship between the machine learning algorithm and the general model; the general model of the nonlinear general process of all targets of each apparatus and the associated machine learning algorithm constitute the general model of the apparatus. This method can realize the modeling of the nonlinear model for some models including the nonlinear basis process.

Fig. 1

**Description**

**TECHNICAL FIELD**

The present invention relates to the industrial field, and in particular to a nonlinear model modeling method, device and a computer-readable storage medium in integrated energy systems.

**BACKGROUND OF THE INVENTION**

Distributed energy systems (DESs) are considered as one of the effective ways to address the unstable consumption of renewable energies. DESs are being built all over the world, including China, and there is an increasing demand for models used for operational optimization and for overall scheduling of the systems in terms of energy production and utilization. Previous researchers have developed specific models for operational optimization that are only applicable to systems with specific energy sources and components. Thus, their models do not meet the requirements of the emerging integrated energy services in practical implementation.

Therefore, it is necessary to provide a universal integrated energy system, to make full use of renewable energies, fossil fuels, residual heat and pressure, new energies and other forms of resources, so that they can supplement each other, and to establish innovative business models through the flexible operation of energy sources, the grid, loads and energy storage facilities, to achieve high-quality, high-efficiency, and the most economical integrated regional supply power, heating, cooling, gas, etc. to various loads with good environmental effects through the use of smart means, so that the requirements of random changes in the terminal loads are met. Integrated energy systems promote the consumption capacity of renewable energies and improve the overall utilization rate of energy.

However, in the process of implementing an integrated energy system as above, models need to be established for a lot of equipment, which usually incorporates many nonlinear physical processes (also called underlying processes), such as the processes related to flow and pressure in the compressor of a gas turbine, the process of converting mechanical energy into pressure energy, etc., and thus the models of such equipment are generally nonlinear models. How to establish these nonlinear models has become an urgent problem to be solved at present.

**BRIEF SUMMARY OF THE INVENTION**

In view of this, a nonlinear model modeling method is proposed in one aspect of the embodiments of the present invention, and a nonlinear model modeling device and a computer-readable storage medium are proposed in another aspect, which are used for the nonlinear model modeling of some models comprising nonlinear underlying processes, which are then used for the establishment of platforms for integrated energy systems.

The nonlinear model modeling method proposed in the embodiments of the present invention comprises: determining complete design point data for each target nonlinear underlying process of each type of equipment; establishing a descriptive formula of a nonlinear underlying process through the use of the ratio of a similarity parameter supported by a similarity criterion to a similarity parameter based on the design point data, to obtain a universal model of the nonlinear underlying process, wherein the universal model comprises a variable parameter that changes nonlinearly as a parameter of an actual working condition changes; constructing a machine learning algorithm between the parameter of the actual working condition and the variable parameter, and establishing a correlation between the machine learning algorithm and the universal model; and taking the universal models of all the target universal nonlinear processes of each type of equipment and the correlated machine learning algorithms as a universal model of a type of equipment.

In one implementation, it further comprises: for each target nonlinear underlying process of one specific piece of equipment of the type of equipment, obtaining historical data of the parameter of the actual working condition and the variable parameter corresponding to the target nonlinear underlying process of the specific piece of equipment, and using the historical data to train the machine learning algorithm, to obtain a training model of the variable parameter of the target nonlinear underlying process; substituting the training model of the variable parameter of the target nonlinear underlying process into the universal model of the target nonlinear underlying process, to obtain a trained model of the target nonlinear underlying process of the specific piece of equipment; and taking the trained models of all the target nonlinear underlying processes of the specific piece of equipment as a trained model of the specific piece of equipment.

In one implementation, the variable parameter has a preset default value.

In one implementation, the equipment includes: gas turbines, heat pumps, internal combustion engines, steam turbines, waste heat boilers, absorption refrigerators, heating machines, multi-effect evaporators, water electrolyzers for hydrogen production, equipment for producing chemicals from hydrogen, reverse osmosis devices, fuel cells, and boilers; the target nonlinear underlying processes of each type of equipment include one or more of the following processes: a heat transfer process, a process of converting electric energy to thermal energy, a chemical process of separating solution substances by use of high-temperature thermal energy, an electrochemical process, a process of pipeline resistance, a process related to flow and pressure, a process of converting thermal energy to mechanical energy, a process of converting electric energy to cold or heat energy, a rectification process, an evaporation process and a filtration process.

A nonlinear model modeling device proposed in the embodiments of the present invention comprises: a determining module, used to determine complete design point data for each target nonlinear underlying process of each type of equipment; an establishing module, used to establish a descriptive formula of a nonlinear underlying process through the use of the ratio of a similarity parameter supported by a similarity criterion to a similarity parameter based on the design point data, to obtain a universal model of the nonlinear underlying process, wherein the universal model comprises a variable parameter that changes nonlinearly as a parameter of an actual working condition changes; a machine learning module, used to construct a machine learning algorithm between the parameter of the actual working condition and the variable parameter, and establish a correlation between the machine learning algorithm and the universal model; and a packaging module, used to package the universal models of all the target universal nonlinear processes of each type of equipment and the correlated machine learning algorithms as a universal model of a type of equipment.

In one implementation, it further comprises: a training module, used to, for each target nonlinear underlying process of one specific piece of equipment of the type of equipment, obtain historical data of the parameter of the actual working condition and the variable parameter corresponding to the target nonlinear underlying process of the specific piece of equipment, and use the historical data to train the machine learning algorithm, to obtain a training model of the variable parameter of the target nonlinear underlying process; and a substituting module, which inputs the training model of the variable parameter of the target nonlinear underlying process into the universal model of the target nonlinear underlying process, to obtain a trained model of the target nonlinear underlying process of the specific piece of equipment, wherein the trained models of all the target nonlinear underlying processes of the specific piece of equipment constitute a trained model of the specific piece of equipment.

In one implementation, the variable parameter has a preset default value.

In one implementation, the equipment includes: gas turbines, heat pumps, internal combustion engines, steam turbines, waste heat boilers, absorption refrigerators, heating machines, multi-effect evaporators, water electrolyzers for hydrogen production, equipment for producing chemicals from hydrogen, reverse osmosis devices, fuel cells, and boilers; the target nonlinear underlying processes of each type of equipment include one or more of the following processes: a heat transfer process, a process of converting electric energy to thermal energy, a chemical process of separating solution substances by use of high-temperature thermal energy, an electrochemical process, a process of pipeline resistance, a process related to flow and pressure, a process of converting thermal energy to mechanical energy, a process of converting electric energy to cold or heat energy, a rectification process, an evaporation process and a filtration process.

A nonlinear model modeling device proposed in the embodiments of the present invention comprises: at least one memory and at least one processor, wherein: the at least one memory is used to store a computer program; the at least one processor is used to call the computer program stored in the at least one memory, to execute the nonlinear model modeling method described in any of the above implementations.

A computer-readable storage medium proposed in the embodiments of the present invention has a computer program stored thereon; the computer program can be executed by a processor and implement the nonlinear model modeling method described in any of the above implementations.

It can be seen from the above solution that, since in the embodiments of the present invention, a universal model of a nonlinear underlying process is obtained by establishing a descriptive formula of the nonlinear underlying process through the use of the ratio of a similarity parameter supported by a similarity criterion to a similarity parameter based on design point data for each target nonlinear underlying process of each type of equipment, the model is applicable to one type of equipment as a universal model. Moreover, the universal model comprises a variable parameter that changes nonlinearly as a parameter of the actual working condition changes, and the variable parameter can be obtained by machine learning through establishing a machine learning algorithm between the parameter of the actual working condition and the variable parameter, so that the universal model is capable of self-learning.

Furthermore, for one specific piece of equipment of the type of equipment, historical data of the parameter of the actual working condition and the variable parameter corresponding to a target nonlinear underlying process of the specific piece of equipment can be obtained for each target nonlinear underlying process, and the historical data is used to train the machine learning algorithm, to obtain a training model of the variable parameter of the target nonlinear underlying process; the training model of the variable parameter of the target nonlinear underlying process is substituted into the universal model of the target nonlinear underlying process, to obtain a trained model of the target nonlinear underlying process of the specific piece of equipment, i.e., an instantiated model conforming to the characteristics of the specific piece of equipment.

In addition, by setting the default value of the variable parameter in advance, it is possible to make the nonlinear model available where site conditions do not permit training the variable parameter, for example, when there is not enough historical data, etc.

Lastly, the modeling method in the embodiments of the present invention may be applied to various nonlinear processes of different types of equipment, with easy implementation and high accuracy.

## BRIEF DESCRIPTION OF THE DRAWINGS

The preferred embodiments of the present invention will be described in detail below with reference to the drawings, so that those skilled in the art will better understand the above and other features and advantages of the present invention. In the drawings:

Figure 1    is an exemplary flowchart of a nonlinear model modeling method in the embodiments of the present invention.

Figure 2    is an exemplary flowchart of another nonlinear model modeling method in the embodiments of the present invention.

Figure 3    is an exemplary structural diagram of a nonlinear model modeling device in the embodiments of the present invention.

Figure 4    is an exemplary flowchart of another nonlinear model modeling device in the embodiments of the present invention.

In the drawings, the following reference numerals are used:

| Numeral | Meaning |
| --- | --- |
| 101-104, 201-203 | Steps |
| 301 | Determining module |
| 302 | Establishing module |
| 303 | Machine learning module |
| 304 | Packaging module |
| 305 | Training module |
| 306 | Substituting module |
| 41 | Memory |
| 42 | Processor |
| 43 | Bus |

## DETAILED DESCRIPTION OF THE EMBODIMENTS

The following example embodiments will further illustrate the present invention in detail in order to clarify its purpose, technical solution and advantages.

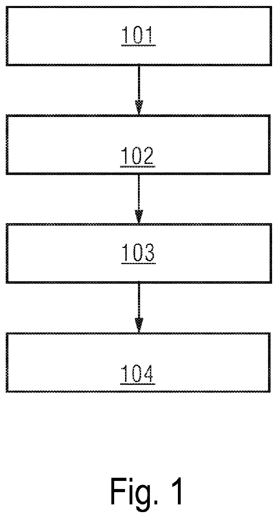

Figure 1 is an exemplary flowchart of a modeling method for nonlinear models in the embodiments of the present invention. As shown in Figure 1, the method may comprise the following steps:

Step 101, determining complete design point data for each target nonlinear underlying process of each type of equipment.

In this step, an underlying process may sometimes be referred to as a physical process, for example, a heat transfer process, a process for converting electric energy, a process related to flow and pressure as mentioned previously, etc. For each device, the underlying processes of interest can be determined, i.e., the underlying processes that need to be modeled. These underlying processes that need to be modeled are referred to as target underlying processes, and those nonlinear target underlying processes can be referred to as target nonlinear underlying processes. For example, for gas turbines, the target nonlinear underlying processes may include: a process related to flow and pressure in the expansion turbine, a process of energy conversion between thermal energy and mechanical energy, etc.; for heat pumps, the target nonlinear underlying processes may include: a heat transfer process, a process of converting electrical energy to thermal energy, a chemical process of separating solution substances through the use of high-temperature thermal energy, an electrochemical process, a pipeline resistance process, a process related to flow and pressure, etc. In addition, for equipment such as gas turbines, heat pumps, internal combustion engines, steam turbines, waste heat boilers, absorption refrigerators, heating machines, multi-effect evaporators, water electrolyzers for hydrogen production, equipment for producing chemicals from hydrogen, reverse osmosis devices, fuel cells, boilers, etc., the target nonlinear underlying processes of each piece of equipment may include one or more of the following: a process related to flow and pressure, a process of converting thermal energy to mechanical energy, a process of converting electric energy to cold or heat energy, a process of pipeline resistance, a heat transfer process, a rectification process, an evaporation process, a filtration process, a chemical reaction process, an electrochemical process, etc.

For each nonlinear underlying process, the complete design point data can be restored according to the published basic design parameters and the common design point information provided to the user by the manufacturer. For example, for a universal model of a process related to flow and pressure, its design point data may comprise the pressure ratio, air flow, etc., and, based on these design point data, relevant design parameters not available to users can be derived, such as the efficiency, inlet resistance, air extraction volume, etc.

Step 102, establishing a descriptive formula of the nonlinear underlying process by use of the ratio of a similarity parameter supported by a similarity criterion to a similarity parameter based on design point data, to obtain a universal model of the nonlinear underlying process; wherein the universal model comprises a variable parameter that changes as a parameter of an actual working condition changes.

In this step, a parameter of an actual working condition refers to a parameter of a specific piece of equipment that changes as the parameters of the actual working condition change. For example, it may be a dimension that changes as mechanical wear occurs after prolonged use, or the temperature that changes as the season changes, or relevant parameters that change as the working condition varies. The variable parameter may have a preset default value.

Since there may be different models for each type of equipment, for example, there may be compressors with different powers such as 5M, 50M, 500M, etc., in order to establish a universal model of compressors, it is necessary to adopt a similarity criterion to support a similarity parameter to replace a specific parameter value. For example, still taking the universal model of the above process related to flow and pressure as an example, the similarity parameters supported by the similarity criteria of flow, pressure and power are used instead of the specific parameters. For example, the similarity criteria of flow may be expressed by formula (1) below:

$$\frac{\dfrac{G1\sqrt{T1}}{P1}}{\dfrac{G0\sqrt{T0}}{P0}} \qquad (1)$$

where G1 is the flow, T1 is the temperature, P1 is the pressure, GO is the flow of the corresponding deign point, T0 is the temperature of the corresponding design point, and P0 is the pressure of the corresponding design point.

Accordingly, the universal model of a process related to flow and pressure may be expressed by formula (2) below:

$$\frac{\dfrac{G1\sqrt{T1}}{P1}}{\dfrac{G0\sqrt{T0}}{P0}} = \mathtt{f(a \times IGV\ angle,\ b \times similarity\ rotation\ speed}$$
$$\mathtt{ratio)\ (2)}$$

where f() is a function, coefficients a and b are variable parameters that change as the parameters of the actual working condition change, and in practical application, a default value may be set for the variable parameters a and b. IGV is the angle of the inlet adjustable guide vane.

Step 103, constructing a machine learning algorithm between the parameter of the actual working condition and the variable parameter.

In this step, a machine learning algorithm between the parameter of the actual working condition and the variable parameter may be constructed based an intelligent neural network or a method supporting big data analysis for machine learning such as vector machines, etc.

Step 104, taking the universal models of all the target nonlinear underlying processes of each type of equipment and the correlated machine learning algorithms as a universal model of the type of equipment.

It can be seen that a nonlinear universal model can be established for each type of equipment through the above process. An integrated energy system platform can be constructed based on these universal models.

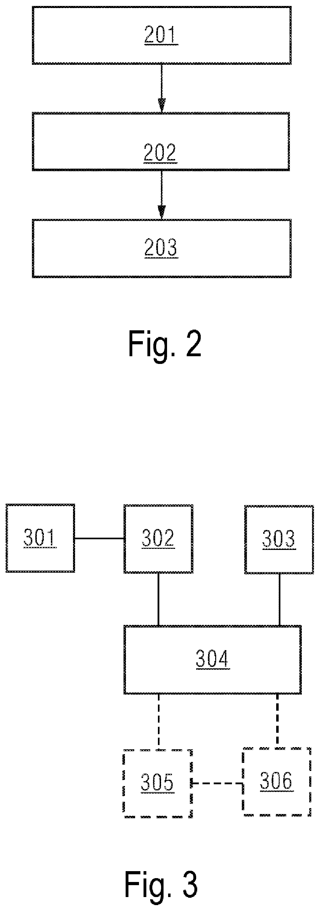

In practical application, after purchasing the integrated energy system platform, the user needs to build their own integrated energy system. At this point, each universal model needs to be associated with specific equipment on site, and thus the universal models need to be instantiated. Accordingly, the method may further comprise the following steps, as shown in Figure 2:

Step 201, for each target nonlinear underlying process of one specific piece of equipment of the type of equipment, obtaining historical data of the parameter of the actual working condition and the variable parameter corresponding to the target nonlinear underlying process of the specific piece of equipment, and using the historical data to train the corresponding machine learning algorithm, to obtain a training model of the variable parameter of the target nonlinear underlying process.

In this step, during specific training, a set of historical data of the parameter of the actual working condition is used as input sample values, the historical data of the variable parameter corresponding to the set of historical data of the parameter of the actual working condition is used as output sample values, and a large number of input sample values and the corresponding output sample values are used to train the machine learning algorithm, to obtain a self-learning model of the variable parameter, also referred to as a training model.

For example, still taking the abovementioned process related to flow and pressure as an example, the historical data of the relevant parameters of the actual working condition of a gas turbine on site and the historical data of the corresponding variable parameters can be obtained, to obtain the input and output sample sets, and a trained model of the variable parameters a and b can be obtained through training.

Step 202, substituting the training model of the variable parameter of the target nonlinear underlying process into the universal model of the target nonlinear underlying process, to obtain a trained model of the target nonlinear underlying process of the specific piece of equipment. The trained model is a self-learning model capable of learning.

In this step, according to the correlation between the machine learning algorithm and the universal model, the training model of the variable parameter of the target nonlinear underlying process can be substituted into the universal model of the target nonlinear underlying process.

For example, still taking the abovementioned process related to flow and pressure as an example, by inputting the current training model of the variable parameters a and b into formula (2) above, the universal model of the process related to flow and pressure of the compressor of the gas turbine on site can be obtained.

Step 203, taking the trained models of all the target nonlinear underlying processes of the specific piece of equipment as a universal model of the specific piece of equipment.

In actual use, the input parameters of the trained model may include the input parameters required for the trained models of all the target nonlinear underlying processes.

The nonlinear model modeling method in the embodiments of the present invention is described in detail above, and the nonlinear model modeling device in the embodiments of the present invention will be described in detail below. The nonlinear model modeling device in the embodiments of the present invention can be used to implement the nonlinear model modeling method in the embodiments of the present invention. Details not disclosed in the device embodiments of the present invention can be found in the corresponding description of the method embodiments of the present invention, and will not be detailed here.

Figure 3 is an exemplary structural diagram of a nonlinear model modeling device in the embodiments of the present invention. As shown in Figure 3, the device may be one that is shown by the solid lines in Figure 3, which comprises: a determining module 301, an establishing module 302, a machine learning module 303 and a packaging module 304.

Among these, the determining module 301 is used to determine complete design point data for each target nonlinear underlying process of each type of equipment.

The equipment may include: gas turbines, heat pumps, internal combustion engines, steam turbines, waste heat boilers, absorption refrigerators, heating machines, multi-effect evaporators, water electrolyzers for hydrogen production, equipment for producing chemicals from hydrogen, reverse osmosis devices, fuel cells, boilers, etc.; the target nonlinear underlying processes of each type of equipment may include one or more of the following processes: a heat transfer process, a process of converting electric energy to thermal energy, a chemical process of separating solution substances by use of high-temperature thermal energy, an electrochemical process, a pipeline resistance process, a process related to flow and pressure, a process of converting thermal energy to mechanical energy, a process of converting electric energy to cold or heat energy, a rectification process, an evaporation process, a filtration process, etc.

The establishing module 302 is used to establish a descriptive formula of the nonlinear underlying process by use of the ratio of a similarity parameter supported by a similarity criterion to a similarity parameter based on design point data, to obtain a universal model of the nonlinear underlying process; wherein the universal model comprises a variable parameter that changes as a parameter of an actual working condition changes. The variable parameter may have a preset default value.

The machine learning module 303 constructs a machine learning algorithm between the parameter of the actual working condition and the variable parameter, and establishes a correlation between the machine learning algorithm and the universal model.

The packaging module 304 is used to pack the universal models of all the target nonlinear underlying processes of each type of equipment and the correlated machine learning algorithms as a universal model of the type of equipment.

To instantiate the above universal models, the nonlinear model modeling device may be one that is shown by the dotted lines in Figure 3, and further comprises: a training module 305 and a substituting module 306.

Between them, the training module 305 is used to, for each target nonlinear underlying process of one specific piece of equipment of the type of equipment, obtain historical data of the parameter of the actual working condition and the variable parameter corresponding to the target nonlinear underlying process of the specific piece of equipment, and use the historical data to train the machine learning algorithm, to obtain a training model of the variable parameter of the target nonlinear underlying process.

The substituting module 306 inputs the training model of the variable parameter of the target nonlinear underlying process into the universal model of the target nonlinear underlying process, to obtain a trained model of the target nonlinear underlying process of the specific piece of equipment. The trained models of all the target nonlinear underlying processes of the specific piece of equipment constitute a universal model of the specific piece of equipment.

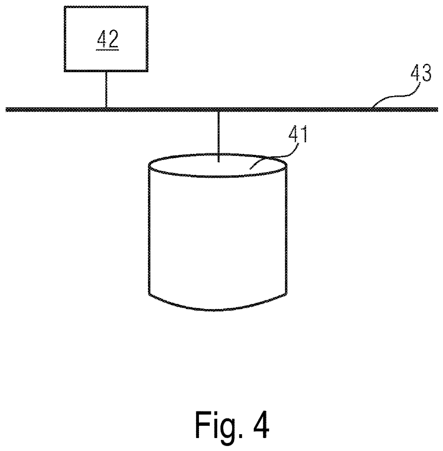

Figure 4 is a schematic structural diagram of another nonlinear model modeling device in the embodiments of the present invention. As shown in Figure 4, the system may comprise: at least one memory 41 and at least one processor 42. In addition, some other components, for example, communication ports, etc., may also be comprised. These components communicate via a bus 43.

Specifically, the at least one memory 41 is used to store a computer program. In one implementation, the computer program may be understood as comprising each of the modules of the nonlinear model modeling device as shown in Figure 3. In addition, the at least one memory 41 may also store an operating system, etc. The operating system may be but is not limited to: an Android operating system, a Symbian operating system, a Windows operating system, a Linux operating system, etc.

The at least one processor 42 is used to call the computer program stored in the at least one memory 41 to execute the nonlinear model modeling method described in the embodiments of the present invention. The processor 42 may be a CPU, a processing unit/module, an ADIC, a logic module, a programmable gate array, etc. It can receive and send data through the communication ports.

It should be noted that not all steps and modules in the above flowcharts and structural diagrams are necessary, and some steps or modules can be ignored based on actual needs. The sequence of execution of the steps is not fixed, and can be adjusted as needed. A functional division of the modules is used only to facilitate the description. In actual implementation, a module may be implemented by multiple modules, and the functions of multiple modules may be implemented by a single module. These modules may be located in a single device or in different devices.

It is understandable that the hardware modules in each embodiment above may be implemented mechanically or electronically. For example, a hardware module may comprise specially designed permanent circuits or logic devices (for example, dedicated processors, such as FPGA or ASIC) to complete specific operations. A hardware module may also comprise programmable logic devices or circuits temporarily configured by software (for example, general-purpose processors or other programmable processors) for performing specific operations. Whether to specifically use mechanical methods or dedicated permanent circuits or temporarily configured circuits (such as software configuration) to implement hardware modules may be determined according to cost and schedule considerations.

Moreover, a computer-readable storage medium is also provided in the embodiments of the present invention, which has a computer program stored thereon, which can be executed by a processor and implement the nonlinear model modeling method described in the embodiments of the present invention. Specifically, a system or device equipped with a storage medium may be provided, and the software program code for implementing the functions of any of the above implementations is stored on the storage medium, so that a computer (or CPU or MPU) of the system or device reads and executes the program code stored in the storage medium. In addition, the operating system operating on the computer may also be used to perform part or all of the actual operations through instructions based on the program code. It is also possible to write the program code read from the storage medium to the memory provided in an expansion board inserted into the computer or to the memory provided in an expansion unit connected to the computer, and then the program code-based instructions cause the CPU, etc. mounted on the expansion board or the expansion unit to perform part and all of the actual operations, so as to implement the functions of any of the above embodiments. Implementations of the storage media used to provide the program code include floppy disks, hard disks, magneto-optical disks, optical disks (such as CD-ROM, CD-R, CD-RW, DVD-ROM, DVD-RAM, DVD-RW, DVD+RW), magnetic tapes, non-volatile memory cards and ROMs. Optionally, the program code may be downloaded from a server computer via a communication network.

It can be seen from the above solution that, since in the embodiments of the present invention, a universal model of a nonlinear underlying process is obtained by establishing a descriptive formula of the nonlinear underlying process by use of the ratio of a similarity parameter supported by a similarity criterion to a similarity parameter based on design point data for each target nonlinear underlying process of each type of equipment, the model is applicable to one type of equipment as a universal model. Moreover, the universal model comprises a variable parameter that changes nonlinearly as a parameter of the actual working condition changes, and the variable parameter can be obtained by machine learning through establishing a machine learning algorithm between the parameter of the actual working condition and the variable parameter, so that the universal model is capable of self-learning.

Furthermore, for one specific piece of equipment of the type of equipment, historical data of the parameter of the actual working condition and the variable parameter corresponding to a target nonlinear underlying process of the specific piece of equipment can be obtained for each target nonlinear underlying process, and the historical data is used to train the machine learning algorithm, to obtain a training model of the variable parameter of the target nonlinear underlying process; the training model of the variable parameter of the target nonlinear underlying process is substituted into the universal model of the target nonlinear underlying process, to obtain a trained model of the target nonlinear underlying process of the specific piece of equipment, i.e., an instantiated model conforming to the characteristics of the specific piece of equipment.

In addition, by setting the default value of the variable parameter in advance, it is possible to make the nonlinear model available where site conditions do not permit training the variable parameter, for example, when there is not enough historical data, etc.

Lastly, the modeling method in the embodiments of the present invention may be applied to various nonlinear processes of different types of equipment, with easy implementation and high accuracy.

The above are only the preferred embodiments of the present invention, and are not intended to limit the present invention. Any modification, equivalent replacement and improvement made without departing from the motivation and principle of the present invention shall be included in its scope.

**Claims**

1. A nonlinear model modeling method, **characterized in that** it comprises:

    determining complete design point data for each target nonlinear underlying process of each type of equipment (101);
    establishing a descriptive formula of the nonlinear underlying process by use of the ratio of a similarity parameter supported by a similarity criterion to a similarity parameter based on design point data, to obtain a universal model of the nonlinear underlying process; wherein the universal model comprises a variable parameter that changes as a parameter of an actual working condition changes (102);
    constructing a machine learning algorithm between the parameter of the actual working condition and the variable parameter, and establishing a correlation between the machine learning algorithm and the universal model (103); and
    taking the universal models of all the target nonlinear underlying processes of each type of equipment and the correlated machine learning algorithms as a universal model of the type of equipment (104).

2. The nonlinear model modeling method as claimed in claim 1, **characterized in that** it further comprises:

    for each target nonlinear underlying process of one specific piece of equipment of the type of equipment, obtaining historical data of the parameter of the actual working condition and the variable parameter corresponding to the target nonlinear underlying process of the specific piece of equipment, and using the historical data to train the machine learning algorithm, to obtain a training model of the variable parameter of the target nonlinear underlying process (201);
    substituting the training model of the variable parameter of the target nonlinear underlying process into the universal model of the target nonlinear underlying process, to obtain a trained model of the target nonlinear underlying process of the specific piece of equipment (202); and
    taking the trained models of all the target nonlinear underlying processes of the specific piece of equipment as a universal model of the specific piece of equipment (203).

3. The nonlinear model modeling method as claimed in claim 1, **characterized in that** the variable parameter has a preset default value.

4. The nonlinear model modeling method as claimed in any of claims 1 to 3, **characterized in that** the equipment includes:

    gas turbines, heat pumps, internal combustion engines, steam turbines, waste heat boilers, absorption refrigerators,
    heating machines, multi-effect evaporators, water electrolyzers for hydrogen production, equipment for producing chemicals from hydrogen, reverse osmosis devices, fuel cells, and boilers;
    the target nonlinear underlying processes of each type of equipment include one or more of the following processes:
a heat transfer process, a process of converting electric energy to thermal energy, a chemical process of separating solution substances by use of high-temperature thermal energy, an electrochemical process, a process of pipeline resistance, a process related to flow and pressure, a process of converting thermal energy to mechanical energy, a process of converting electric energy to cold or heat energy, a rectification process, an evaporation process and a filtration process.

5. A nonlinear model modeling device, **characterized in that** it comprises:

a determining module (301), used to determine complete design point data for each target nonlinear underlying process of each type of equipment;
an establishing module (302), used to establish a descriptive formula of the nonlinear underlying process by use of the ratio of a similarity parameter supported by a similarity criterion to a similarity parameter based on design point data, to obtain a universal model of the nonlinear underlying process; wherein the universal model comprises a variable parameter that changes as a parameter of an actual working condition changes;
a machine learning module (303), which constructs a machine learning algorithm between the parameter of the actual working condition and the variable parameter, and establishes a correlation between the machine learning algorithm and the universal model; and
a packaging module (304), used to package the universal models of all the target nonlinear underlying processes of each type of equipment and the correlated machine learning algorithms as a universal model of the type of equipment.

6. The nonlinear model modeling device as claimed in claim 5, **characterized in that** it further comprises:

a training module (305), used to, for each target nonlinear underlying process of one specific piece of equipment of the type of equipment, obtain historical data of the parameter of the actual working condition and the variable parameter corresponding to the target nonlinear underlying process of the specific piece of equipment, and use the historical data to train the machine learning algorithm, to obtain a training model of the variable parameter of the target nonlinear underlying process; and
a substituting module (306), which inputs the training model of the variable parameter of the target nonlinear underlying process into the universal model of the target nonlinear underlying process, to obtain a trained model of the target nonlinear underlying process of the specific piece of equipment; wherein the trained models of all the target nonlinear underlying processes of the specific piece of equipment constitute a trained model of the specific piece of equipment.

7. The nonlinear model modeling device as claimed in claim 5, **characterized in that** the variable parameter has a preset default value.

8. The nonlinear model modeling device as claimed in any of claims 5 to 7, **characterized in that** the equipment includes:

gas turbines, heat pumps, internal combustion engines, steam turbines, waste heat boilers, absorption refrigerators, heating machines, multi-effect evaporators, water electrolyzers for hydrogen production, equipment for producing chemicals from hydrogen, reverse osmosis devices, fuel cells, and boilers;
the target nonlinear underlying processes of each type of equipment include one or more of the following processes: a heat transfer process, a process of converting electric energy to thermal energy, a chemical process of separating solution substances by use of high-temperature thermal energy, an electrochemical process, a process of pipeline resistance, a process related to flow and pressure, a process of converting thermal energy to mechanical energy, a process of converting electric energy to cold or heat energy, a rectification process, an evaporation process and a filtration process.

9. A nonlinear model modeling device, **characterized in that** it comprises: at least one memory (41) and at least one processor (42), wherein:

the at least one memory (41) is used to store a computer program; and
the at least one processor (42) is used to call the computer program stored in the at least one memory (41) to execute the nonlinear model modeling method claimed in any of claims 1 to 4 .

10. A computer-readable storage medium, which has a computer program stored thereon; and is **characterized in that**

**EP 4 024 145 A1**

the computer program can be executed by a processor and implement the nonlinear model modeling method claimed in any of claims 1 to 4.

**10**

Fig. 1

Fig. 2

Fig. 3

Fig. 4

| INTERNATIONAL SEARCH REPORT | International application No. |
|---|---|
| | **PCT/CN2019/109674** |

**A. CLASSIFICATION OF SUBJECT MATTER**

G05B 17/02(2006.01)i

According to International Patent Classification (IPC) or to both national classification and IPC

**B. FIELDS SEARCHED**

Minimum documentation searched (classification system followed by classification symbols)

G05B

Documentation searched other than minimum documentation to the extent that such documents are included in the fields searched

Electronic data base consulted during the international search (name of data base and, where practicable, search terms used)

CNPAT; CNKI; WPI; EPODOC: 模型, 建模, 非线性, 线性, 设计点, 理论, 公式, 相似性准则, 相似准则, 相似, 相近, 通用模型, 参数, model+, linear, nonlinear, non-linear, similar, similar criterion

**C. DOCUMENTS CONSIDERED TO BE RELEVANT**

| Category* | Citation of document, with indication, where appropriate, of the relevant passages | Relevant to claim No. |
|---|---|---|
| A | CN 105785791 A (NANJING UNIVERSITY OF AERONAUTICS AND ASTRONAUTICS) 20 July 2016 (2016-07-20)<br>description, paragraphs [0033]-[0079] | 1-10 |
| A | CN 109800449 A (NANJING UNIVERSITY OF AERONAUTICS AND ASTRONAUTICS) 24 May 2019 (2019-05-24)<br>entire document | 1-10 |
| A | CN 105893669 A (ZHEJIANG UNIVERSITY) 24 August 2016 (2016-08-24)<br>entire document | 1-10 |
| A | US 2012316791 A1 (Chevron U.S.A. Inc.) 13 December 2012 (2012-12-13)<br>entire document | 1-10 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **20 May 2020** | **23 June 2020** |

| Name and mailing address of the ISA/CN | Authorized officer |
|---|---|
| **China National Intellectual Property Administration (ISA/CN)**<br>**No. 6, Xitucheng Road, Jimenqiao Haidian District, Beijing 100088**<br>**China** | |
| Facsimile No. **(86-10)62019451** | Telephone No. |

Form PCT/ISA/210 (second sheet) (January 2015)

## INTERNATIONAL SEARCH REPORT
### Information on patent family members

International application No.

**PCT/CN2019/109674**

| Patent document cited in search report | | | Publication date (day/month/year) | Patent family member(s) | | | Publication date (day/month/year) |
|---|---|---|---|---|---|---|---|
| CN | 105785791 | A | 20 July 2016 | None | | | |
| CN | 109800449 | A | 24 May 2019 | None | | | |
| CN | 105893669 | A | 24 August 2016 | None | | | |
| US | 2012316791 | A1 | 13 December 2012 | CA | 2827240 | A1 | 13 December 2012 |
| | | | | EP | 2718746 | A2 | 16 April 2014 |
| | | | | AU | 2012268718 | A1 | 11 April 2013 |
| | | | | CN | 103415786 | A | 27 November 2013 |
| | | | | WO | 2012170201 | A2 | 13 December 2012 |
| | | | | EA | 201391484 | A1 | 31 March 2014 |
| | | | | BR | 112013018895 | A2 | 28 March 2017 |
| | | | | ID | 201405281 | A | 30 December 2014 |

Form PCT/ISA/210 (patent family annex) (January 2015)